# EUROPEAN PATENT SPECIFICATION

(11) **EP 1 269 354 B1**
(45) Date of publication and mention of the grant of the patent: **29.09.2004**
(21) Application number: 01919234.3
(22) Date of filing: 02.04.2001
(51) Int. Cl.: G06F 17/30

(54) **A METHOD AND SYSTEM FOR PUSHING INFORMATION**
VERFAHREN UND SYSTEM ZUM SCHIEBEN VON INFORMATIONEN
PROCEDE ET SYSTEME PERMETTANT DE POUSSER DES INFORMATIONS

(30) Priority: 31.03.2000 DK 200000545
(43) Date of publication of application: 02.01.2003
(73) Proprietor: Ritzaus Medienet A/S, 1264 Copenhagen K (DK)
(72) Inventor: GREGERSEN, Carsten, Rhod, DK-8230 Risskov (DK); WULLF, Jens, Winther, DK-8991 Spentrup (DK); SCHACK, Ulrik, Arndt, DK-2900 Hellerup (DK); STEGMANN, Uffe, SE-21129 Malmö (SE); HOJER-PEDERSEN, Niels, DK-2900 Hellerup (DK)
(74) Representative: Boesen, Johnny Peder
(86) International application number: PCT/DK2001/000219
(87) International publication number: WO 2001/077887

(56) References cited:
- IBM TECHNICAL DISCLOSURE BULLETIN, vol. 40 , no. 12, December 1997 (1997-12), page 75 XP002901795 Internet Push Warning
- WILLIAM R STANEK: "Pushing the envelope with push technology" PC MAGAZINE , [Online] 23 September 1997 (1997-09-23), XP002901796 Retrieved from the Internet: <URL:http://www.zdnet.com/pcmag/issues/161 6/pcmg0032.htm> [retrieved on 2000-09-27]
- DATABASE [Online] August 1997 (1997-08) STEPHEN E ARNOLD ET AL: "Push Technology - Driving traditional online into a corner " retrieved from URL:HTTP://WWW.ONLINEINC. COM/DATABASE/AUGDB97/ARNOLD8.HTML XP002901797

## Description

A system and a method of push/transmitting information This invention relates to a method of automatically pushing/transmitting information from a server to a client.

The invention also relates to a system for same.

In connection with the search for and/or receipt of information and/or data from eg the Internet where a comprehensive corpus of information and data from an often wide variety of sources is found, it is a very considerable advantage to automatically receive the information that is of interest and relevance.

Typically a user will use a browser, such as eg Netscape Communicator, Microsoft Internet Explorer or the like, on his computer to display information on an html-page containing eg various new information supplied by some provider or other.

Such information/news are typically updated continuously to provide the user with the best possible service and to ensure that the user is updated with regard to the information supplied, but in order for the update to also appear in the user's browser it is necessary for the user to activate an update-button in the browser or the like so as to once again reload the html-page containing the updated information.

However this is not particularly convenient, in particular in case of information that is changed/updated quickly or frequently, such as share prices, news bulletins, sports results, etc.

To solve this, a technology is available which is generally designated push technology that consists in that information, data, etc are forwarded to a client computer on a network, such as eg the Internet, without the user specifically requesting this information or needing to take other active measures. The information is so to speak pushed to the user's computer from the provider via the network.

The document IBM TDB, vol.40, no.12, 12 December 1997 presents users with an easy way to prevent a push to slow the system down while they are working.

A push-like technology uses eg the system Pointcast that is able to provide a user with relevant information as long as the user is online. However, Pointcast is associated with certain drawbacks, since it presupposes that the user downloads a somewhat comprehensive program that is to be installed and configured correctly to work.

Besides, programs such as Pointcast establish their push-like effect by actively listening in on a connection, which is also known as polling. In case of polling the program actively and periodically (perhaps once a second) enquires the provider of information, eg a server, in a loop that is, in principle, infinite. Thus, resources are taken up both at the client's and also on the server, since it has to respond to the enquiries from perhaps a large number of clients.

In the following the term 'client' will be used to designate a local computer connected via a network, such as eg the Internet, to a central computer also referred to as a server. A server is typically connected to a number of clients that need not be located physically close to each other.

It is an object of the invention to provide a method whereby it is possible to select and transmit relevant information/data to a client, ie a computer, in a network without presupposing one or more active measures on the part of the user. This means to provide a push of information from at least one server to at least one client.

It is a further object to enable utilization of standard functionality in a program for handling and displaying information, such as eg a browser.

It is a third object of the invention to provide flexibility with regard to the implementation of a desired safety level.

It is a fourth object of the invention to at least enable simultaneity of transmission/receipt of relevant information and/or data. This means that all recipients are able to or, ceteris paribus, to an increased extent able to receive information and/or data at least substantially simultaneously.

This is obtained by a method of the kind described above, wherein said method further comprises
- establishment of a first data-transmission connection/channel between the client and the central server;
- transmission, via said first connection/channel from the server to the client, of at least an indication indicating that relevant information is available at the server;
- receipt of said indication by the client; establishment or use of an already established second data-transmission connection/channel between the client and the central server on the basis of said received indication; and
- transmission of said relevant information from the central server to the client via said second connection/channel,
and wherein said indication is of a small magnitude compared to the magnitude of said relevant information.

Hereby an event-triggered automatic exposure of digital objects is provided, which means that - on the basis of a given event - relevant information/data will be received.

For instance, the client may have information pushed regarding a new news telegram that a band plays nearby, that a new product is finished, commercials, and the like.

Use of two transmission channels/connections further provides a high degree of flexibility with regard to safety against unauthorized access to the user's computer/system in connection with the push of information.

The first connection that receives the indication does not necessarily have to possess a particularly high degree of safety, since this information cannot be of any use to anybody else. The functionality of this connection is comparatively readily implemented, monitored and controlled, since it needs only to react when an indication is received. Thus, there is no need to poll the server periodically, which would otherwise impose a load on the server and the client.

The other connection can be implemented with a degree of safety that matches an actual need. If there is a need for a high degree of safety, this connection could be implemented with the so-called secure socket layer (SSL) in connection with a browser. Hereby safety features are provided, such as authentification of the server, encryption of transmitted information/data, etc.

If a browser is used to constitute the second connection, the standard functionalities of the browser are used to a very high degree, which would translate into the fact that the remaining software necessary for a solution in accordance with the present invention does not have to be comprehensive and does not require cumbersome configuration.

Furthermore, simultaneity - that is delivery of information/data simultaneously to a number of clients - is accomplished completely or at least to a substantial extent, since it is merely an indication and not the information/data in its entirety that is transmitted. Thus, all users are able to receive the information at the same time.

Such indication can be very small (much less than one single kilobyte) and therefore it is able to pass the network completely or substantially without delay. In this manner all clients will simultaneously receive a message that relevant information is available.

Alternatively the indication can be accompanied by some kind of description of the object, eg a title, while retaining its very small size.

According to one embodiment said first data-transmission connection is provided/established and controlled by program information intended therefor. Hereby the first data-transmission connection is controlled and monitored by an independent program or a program part.

According to a preferred embodiment the method further comprises
- initial transmission between the central server and the client of initial information comprising initial relevant information by the time of establishment of the second connection/channel; and
- transmission and receipt of said program information from the central server and the client.

Hereby it is possible for a user, via the client, to use eg a browser to establish a connection to a supplier of information/data via his html-page and to have relevant information displayed that has arrived since the user was last online, or merely to display the entire corpus of information/data to the user.

Additionally, it is also obtained that the functionality needs not be installed, since the program/program information that opens and controls the first connection/communication channel is downloaded each time the user wishes to use the system/method.

This provides the very considerable advantage that the user needs not himself install and configure a program to provide the functionality. Besides, it is also ensured that it is always the most recent version of the program that is used.

Preferably the program information is a Java Applet. Hereby the functionality can also be provided independently of the specific platform/control system used by the client computer. All that is needed is that the browser used by the user must be able to run Java programs, which is the case for all standard browsers.

Alternatively, it must be checked whether there is a more recent version of the program information/applet available on the server and in that case to download it and otherwise merely use the existing one.

Typically a Java Applet with such functionality (handling and control of the first communication connection/channel) will not be very capacity-intensive (typically about 50 kb), which is relatively quickly transmitted via the Internet.

According to one embodiment said first and second connections are established via the same physical connection each on their own different port. This considerably facilitates the administrative burden with regard to configuration and/or maintenance. Besides, standard server software can be used for the construction, configuration and/or maintenance. Besides, it is possible to freely choose web server and to freely choose standard communication programs at the client, such as eg browser.

According to an alternative embodiment said first and second connections are established via the same physical connection on the same port. Apart from that, the connections can be established on each their own physical connection.

According to one embodiment, the transmission of said relevant information from the central server to the client via said other connection/channel comprises
- transmission of one or more links to a homepage, wherein said homepage comprises said relevant information; and
- activation at the client of said one or more links whereby said relevant information is transmitted to the client.

Alternatively a predetermined link/a predetermined URL is used to download the homepage.

The homepage/html-page can either be found directly on the server and/or some other provider server. In case it is found only at another provider server, the server must be provided with relevant metadata that describe the information on the homepage.

According to a preferred embodiment, the central server continuously receives and stores in a storage system any new, relevant information deriving from one or more information sources.

Hereby relevant and topical information from other information and data sources are collected and optionally processed in order to optionally be forwarded to the client computers. This ensures ongoing updating and revision of the information and/or data on the server.

A central processing of data/information is also ensured, and a client only needs one connection to a location to receive data from a variety of sources.

According to one embodiment the central server continuously checks the storage system to detect relevant information, if any.

Hereby it is ensured that updating of information and/or data is 'detected' and processed as expediently as possible.

According to a preferred embodiment said indication is transmitted on the basis of an individual user profile relating the user(s) that use(s) the client, wherein the user profile depends on one or more user-selected criterion/criteria.

In this manner, users are able to tailor the preferences that are particularly important to them. For instance, a user may indicate that he is more interested in sports than politics, etc. Besides they are also able to allocate a priority to various types of information and/or data.

The user-specified criteria can be eg a category of information, such as foreign affairs, domestic affairs, business and industry, politics, crime, finance, etc.

Other user-specified criteria could be a priority plus keyword, such as eg 'Poul Nyrup' and the like.

According to an alternative embodiment said indication contains or is followed by a descriptive part, and the method further comprises display of the descriptive part to a user, where the user is to indicate his acceptance prior to transmission of said relevant information from the central server to the client via said second connection/channel.

In this manner the user is able to make a choice in the light of the descriptive part that could be, for instance, a title, an abstract, etc., prior to the transmission of the relevant information/data, and the user is thus able to decline the push if it is not desired to receive the information now or ever - whichever may be the case - which means that the information will not be downloaded, but merely stay ready on the server until the next time the user logs ontc the system.

Alternatively declining the push could cause the information to be removed from the user's information, and/or the user profile of the user to be updated.

According to one embodiment, said first data transmission connection/channel can be provided by a TCPIP socket connection. This connection is very simple and does not impose a substantial load on neither the client nor the server.

According to one embodiment said other data transmission connection/channel can be provided by a http or http/s connection whereby a standard browser can be used as user interface to have the relevant information displayed. https is used if there is a need for further safety.

According to a preferred embodiment said information comprises metadata related to one or more of the following:
- a given text format (ASCII, Word, Wordperfect, etc.);
- a given image format (eg. JPEG, BMP, PCX, TIFF, GIF, etc.);
- a given sound format (eg WAV, VOC, Midi, etc.); and
- a given streaming format (MPEG, AVI, RealAudio; RealVideo, etc.); or
- other suitable digital formats.

In this manner all types of different information formats and combinations thereof can be transmitted to the user/the client computer.

Additionally, the invention comprises en embodiment of the method, wherein the method further comprises
- continuous checks on the server whether relevant information is present in a corpus of information that is of interest to one or more given clients in accordance with one or more pre-determined criteria;
- provision and/or updating of at least a part of an html page that comprises said relevant information to the given client(s), wherein the html page is located on the server and/or some other provider server;
- dispatch of a indication via said first connection to be received by the given client(s), the dispatch being dependent on said continuous checks on the server; and
- automatic provision of said information to the given client(s) on the basis of said indication and via said generated and/or updated html page, where said information is provided via said second connection.

The html-page/homepage can be located either directly on the server and/or some other provider server. In case it is present at some other provider server only, the server is to be provided with relevant metadata that describe the information on the homepage at the other provider server.

In another embodiment, the method further comprises
- continuous checks on the server whether relevant information is present in a group of information that is of interest to one or more given clients in accordance with one or more pre-determined criterion/criteria;
- provision of an e-mail that comprises said relevant information to the given client(s);
- dispatch of said indication via said first connection to be received by the given client(s), the dispatch being dependent on said continuous checks on the server; and
automatic display of said information at the given client(s) on the basis of said indication and said e-mail, where said information is provided via said second connection.

According to one embodiment, the method comprises receipt of said program information from the server at the given client(s), where the program information causes the generated and/or updated html-page or e-mail to be provided on the basis of said indication.

According to one embodiment, said program information is transmitted to a client when the client logs onto the server, where the transmission is effected transparently for a user of the client. For instance, the program information is a Java applet that is transmitted to the client at each session. In this manner it is ensured that the version present at the user is always updated to the most recent functionality. Besides, the applet can be installed transparently to a user by the relevant client, which means that the applet is installed automatically without any active measures on the part of the user. Thus, the user does not have to spend time updating and configuring the program when new versions become available.

According to one embodiment, said indication comprises a link or a URL to the generated and/or updated html-page, whereby a standard browser automatically provides the html-page.

According to one embodiment, said criteria comprise a modifiable user profile.

It is a further object of the invention to provide a system that is associated with the same advantages for the same reasons as the above method.

This is accomplished by means of a system of automatically transmitting information, the system comprising a client and a server, and
- first means for establishing a first data transmission connection/channel between the client and a central server;
- means for transmitting, via said first connection/channel from the server to the client, at least an indication to indicate that relevant and/or updated information is available at the server;
- means for receiving said indication by the client;
- other means for establishing or using an already established second data transmission connection/channel between the client and the central server on the basis of said received indication; and
- transmission of said relevant information from the central server to the client via said other connection/channel,
and wherein said indication is of a small magnitude compared to the magnitude of said relevant informataion.

According to one embodiment the system contains program information configured for providing/establishing and controlling said first data transmission connection.

According to one embodiment said first and second connections are established via the same physical connection on their own different port. Alternatively the first and the second connection can be established via the same physical connection on the same port or on each their physical connection.

According to an alternative embodiment the system further comprises
- initial transmission between the central server and the client of initial information comprising initial relevant information by the time of establishment of the second connection/channel; and
transmission and receipt of said program information from the central server and the client.

According to a preferred embodiment, the central server comprises a storage system configured for storing new relevant information, if any, received currently from one or more information source(s).

According to an alternative embodiment said indication is transmitted on the basis of an individual user profile relating to the user(s) that use(s) the client, wherein said user profile depends on one or more user-selected criterion/criteria.

According to one embodiment said indication contains or is followed by a descriptive part, and the method further comprises display of the descriptive part to a user, where the user is to express his acceptance prior to or initiate transmission of said relevant information from the central server to the client via said second connection/channel.

According to one embodiment said first data transmission connection/channel is provided by a TCP/IP socket connection, and said second data transmission connection/channel is provided by a http/https connection.

The invention also comprises a client separately and a server separately, each featuring the above advantages and embodiments.

In one embodiment, the server
- is configured for continuously checking whether there is information available in an information corpus that is relevant to one or more given client(s) in accordance with one or more pre-determined criteria;
- comprises means for providing and/or updating at least a part of an html-page that comprises said relevant information to the given client(s), where the html-page is located on the server and/or some other provider server;
- comprises transmission means for transmitting said indication for receipt by the given client(s), the tranmission being dependent on said continous checks on the server;
and wherein each given client
- comprises means for automatically providing said information on the basis of said indication and via said generated and/or updated html-page, where said information is provided via said second connection.

In one embodiment, the server further
- is configured for continuously checking whether there is information available in an information corpus that is relevant to one or more given client(s) in accordance with one or more pre-determined criteria;
- comprises means for providing an e-mail that comprises said relevant information to the given client(s);
- comprises transmission means for transmitting said indication for receipt by the given client(s), the transmission being dependent on said continuous checks on the server;
and wherein each given client
- comprises means for automatically providing said information on the basis of said indication and said e-mail, where said information is provided via said second connection.

According to one embodiment the given client(s) is/are configured to each receive program information, where said program information causes the generated and/or updated html-page or e-mail to be provided on the basis of said indication.

According to one embodiment said program information is transmitted to a client when the client logs onto the server, wherein the transmission is accomplished transparently to a user of the client.

According to one embodiment said indication comprises a link or a URL to the generated and/or updated html-page, whereby a standard browser automatically provides the html-page.

According to one embodiment, said first connection and said second connection are established via one single physical connection each their own different port, via two different physical connections or via one single physical connection on the same port.

In the following the invention will be explained in further detail with reference to the drawing, wherein
Figure 1a illustrates a flowchart for an embodiment of the method according to the invention, as seen by the client;
Figure 1b illustrates a flowchart for an alternative embodiment of the method according to the invention, as seen by the client;
Figure 1c illustrates a flowchart for an alternative embodiment of the method according to the invention, as seen by the server;
Figure 2 illustrates a flow of information for one embodiment of the invention;
Figure 3 shows a schematical block diagram for one embodiment of the system according to the invention; and
Figure 4 illustrates one embodiment of the system according to the invention in another manner;
Figure 5 illustrates the course of communication between a server and a client in accordance with the invention.

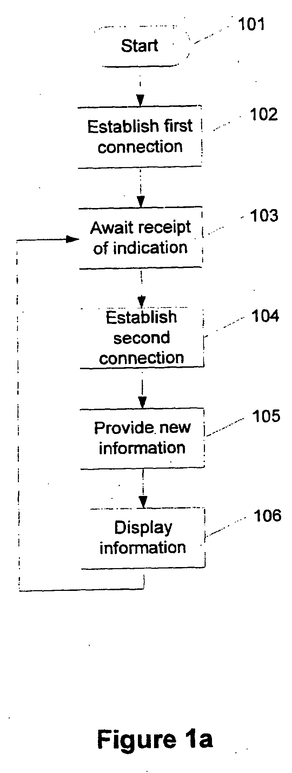

Figure 1a illustrates a flowchart of one embodiment of the method according to the invention, as seen by the client. The method is implemented and initiated in step (101). In step (102) a first connection is established between the client and a server that is responsible for the provision of information. This establishment is initiated with the client who is also responsible for the handling thereof.

In step (103) it is checked whether an indication is received on the first connection that indicates that relevant information is available on the server to one or more users of the client. Otherwise receipt of such indication is awaited. So to speak, the client awaits this indication from the server. Users of the client can perform other tasks on the computer while awaiting the indication.

The first connection could be a connection provided for instance by a TCPIP socket.

Alternatively the user can also be notified when the client receives the indication whereby the user becomes aware that there is new information/data. For instance, the user could also be introduced to a descriptive part, optionally received along with the indication. Besides, the user can be presented with an option that enables him to accept or decline download of the new information in order to thereby postpone display of the information to a later stage.

In case such indication is received, the method proceeds to step (104) wherein the client establishes or uses an already established second connection. Such connection could be eg an http or https connection over the Internet. The second connection can either be a completely separate connection/channel or merely a second communication port on the same connection as in step (102).

Then step (105) is performed wherein the new information is provided from the server, ie is transmitted to the client in order to be subsequently displayed to the user in step (106).

This could be accomplished eg by an html-page displayed in a browser on the client being once again up-dated/downloaded whereby the new information becomes available.

Now step (103) is once again performed and the client awaits new indications on the first connection.

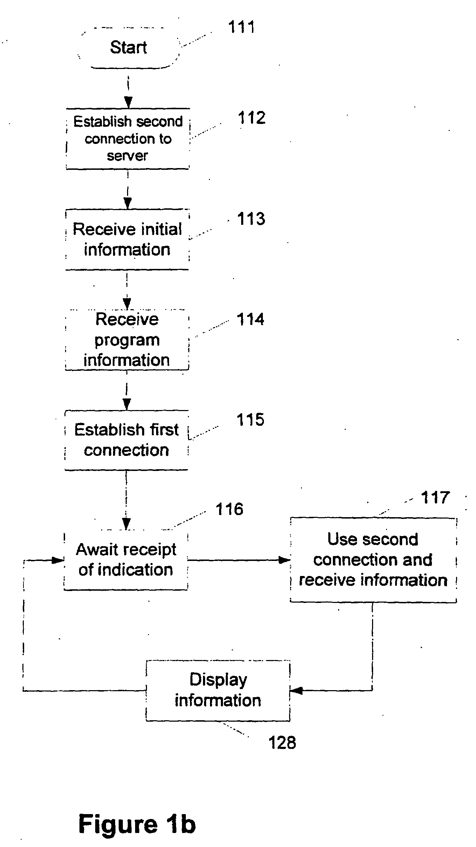

Figure 1b illustrates a flowchart for an alternative embodiment of the method according to the invention, as seen by the client. The procedure starts in step (111).

In step (112) a second connection to a server is established that is responsible for the provision of information. Alternatively a second port on the first connection is used/established.

This could be accomplished eg in that a user of the client opens a browser on the computer/client and typed a URL whereby a connection to the server is established, and an html-page with initial information is displayed on the client. The initial information could be eg relevant information that have appeared since the user/client was last connected to the server.

Receipt of initial information is accomplished in step (113).

In step (114) program information is received that is responsible for the establishment and control with a first connection. This program information could be for instance a Java applet that is downloaded to the client when, via a browser, it establishes the second connection in step (112).

Once this Java applet is received and executed, it establishes a first connection by step (115) in order to subsequently await receipt of an indication that indicates that new information is available from the server.

'When the indication is received step (117) is executed, wherein the second connection (or second port/channel) is used to receive the indicated information that is displayed in step (118) following receipt.

Then step (116) is once again executed and an indication of further new information, if any, is awaited.

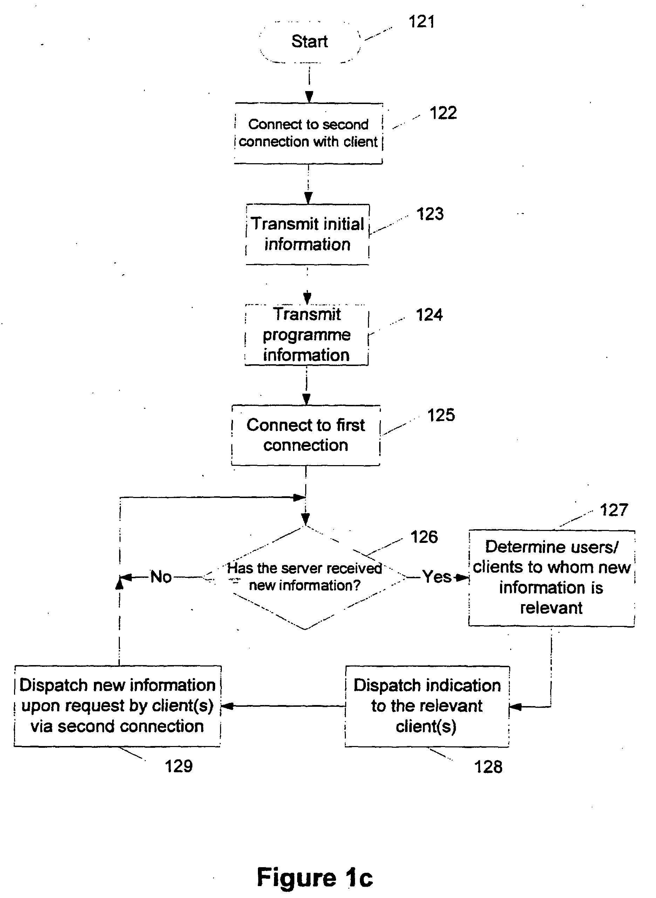

Figure 1c illustrates a flowchart for an alternative embodiment of the method according to the invention, as seen by the server.

The method is implemented and initiated in step (121). In step (122) the server responsible for the provision of information is connected to a second connection with a client. This establishment is started with the client who is also responsible for the handling thereof.

Then initial information is dispatched, such as eg an html-page with information, in step (123), following which program information, such as eg a Java Applet intended for controlling and establishing a first connection, is dispatched to the client along with the html-page.

The Java Applet is executed at the client and establishes a first connection intended for receiving an indication of new information/data from the server.

In step (126) it is checked whether the server has received any new information or not from one or more external news, data sources and/or the like. If this is not the case the test (126) is executed yet again after a given time interval has lapsed. This is repeated until the server has received and detected new information, following which step (127) is executed.

In step (127) the users/clients are determined to which the information received is relevant. This can be accomplished eg by having a user profile for each user/client, where eg fields of interest, priorities, keywords, preferences, etc. are listed. The user profile can be both a user-defined/updated or a centrally controlled/defined user profile.

An indication is subsequently dispatched via the first connection to the users/clients that are, according to their user profile, to receive the information/data.

Then in step (129) the server awaits for the clients to request information, following which it is transmitted via the second connection/another port on the first connection. Preferably a URL/web-address is merely sent to a specified homepage comprising a the relevant information. This homepage can be found either on the server and/or on an external provider server.

Subsequently step (126) is reverted to, wherein the server awaits receipt of further information.

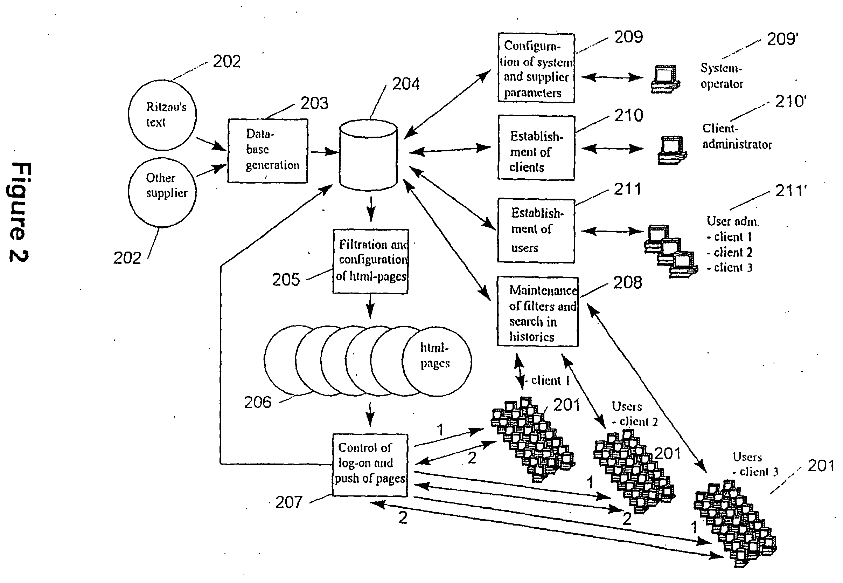

Figure 2 illustrates a flow of information for one embodiment of the invention.

The figure schematically shows various components of a system according to the invention.

Shown is a number of clients (201) whereas the remainder are functions in or in relation to a server that supplies information/data to the clients (201).

A number of news distributors (202) transmit data to database generation (203), where they are processed and stored as one or more database(s) in a storage system (204). The storage system (204) is treated and filtered in (205) in accordance with a number of user profiles, and on the basis of these user profiles a number of htm1-pages are generated (206). These pages (206) form the basis of the information offered to the clients (201).

By means of a number of connections the server is connected to the clients, where each client is connected to two connections/channels; a first connection (designated by 1) that communicates both ways, and a second connection (designated by 2) that communicates information to the respective client (201). These connections correspond to the first and the second connections explained above. Alternatively the two connections can be provided by use of two different pcrts on one single physical transmission connection/channel.

In this embodiment the users (201) are able to configure and modify their personal user profile as designated by (208).

Besides a system operator (209') is able to define system and supplier parameters as designated by (209), whereas a client administrator (210') and a user administrator (211') deals with establishment of clients (210) and establishment of users (211), respectively. This information is downloaded into the database (204).

In the following possible formats and services are exemplified.

Examples of formats processed in the database generation:
- 7901 and 'sgml processes' as structured in-data that are located in the database

Examples of parameters updated by system administrator:
- specification whether individual log-on is required;
- global limits to the amount of lines in index;
- rules governing cookies and other log-on regulation.

Examples of parameters updated by client administrator:
- client name, IP addresses from where log-on is executed; etc, and in particular
- which parts of the supplier's supply of material that are comprised by the clients subscription.

Examples of parameters updated by the user administrator:
- user id; password, username.

Examples of parameters updated by users:
- password;
- number of lines in index and search result;
- columns and order of columns in index;
- control of opening mechanism of browser windows (number of simultaneously open windows; as well as and in particular
- which incoming deliveries among incoming data are to trigger an alarm, ie opening of a separate browser window in which the contents are displayed/played.

Comments to filtering and configuration of html pages
- index and alarm pages are configured per recorded active session

Comments to control of log-on and push of pages.
- Each time an index page and optionally an alarm page has been constructed for the active users, notification is pushed on eg port 8530. Thus, the user opens a permanent session on port 8530 and receives data (1). For instance, URLs are pushed to be used for a call on the parallel http session on part 80 (2). Alternatively two separate connections/channels can be used. Additionally one single physical connection can be used where the same port, eg port 80, is used.
- In one implementation the various subscription rights entail that all users with a client to have their indexes updated simultaneously, and that index pages are updated at the individual client only when warranted by his subscription.

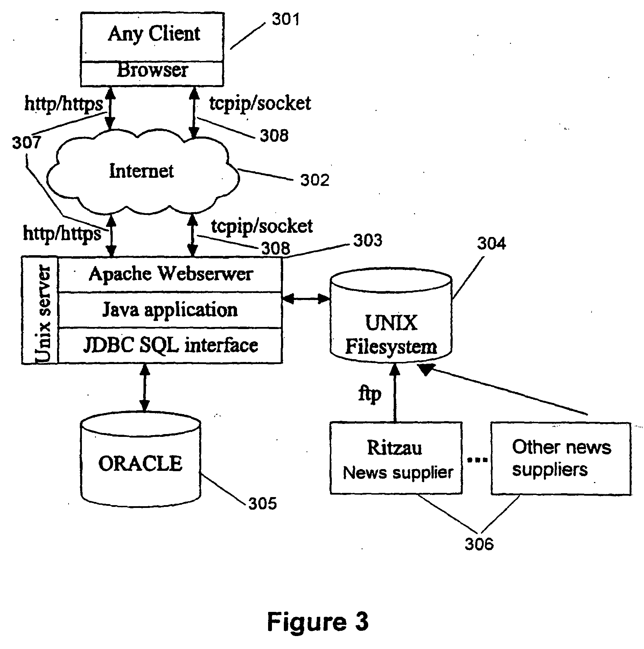

Figure 3 shows a schematical block diagram for one embodiment of the system according to the invention. Shown in the figure is a client (301) that is a computer used by one or more users. The client (301) is equipped with a browser and is connected to the Internet (302) via a suitable connection such as eg a modem, a permanent data link, etc.

Also connected to the Internet (302) is a server/a system (303), too, that is responsible for forwarding/pushing information to the client (301)/user. The server (303) could be for instance a UNIX server. The server (303) comprises suitable software as will be described in the following, a database (305) and a file system (304).

The client (301)/user logs onto the server (303) and calls the URL that shows recently arrived news bulletins and/or other information/data via a data transmission connection/channel (307). One application, eg a Java application, on the server (303) produces an html page with news bulletins and/or other information/data that match the user's profile, and transmits this page back to the browser at the client (301) via the connection (307) over the Internet (302). The connection (307) is typically an http/https connection. This html page is accompanied by a Java applet that is installed and started by the local browser on the client (301).

This applet generates a further connection (308), for instance a TCPIP socket, to the Java application on the central server (303). The applet subsequently 'listens in on' the connection following a notification/an indication that new news have arrived.

At some point a news source (306), eg Ritzau, uploads with eg ftp a telegram to the file system (304) on the central server (303). The Java application continuously scans the area to which the news source(s) (304) up-load(s) the telegrams/information. The new information is 'detected' and the Java application records the telegram in the database (305) that could for instance be an Oracle database, eg version 7.3.4 or more a more recent one.

The Java application knows which clients (301)/users that listen for news and forwards a notification/an indication about news to the clients (301)/users to which the telegram/information is to be directed, by means of user profiles via the connection (308).

The Java applet at the individual client (301) receives this indication and subsequently calls the URL in the browser via the connection (307), whereby the html page is updated with the new information. Subsequently the applet reverts to its listening position, and the process can be repeated.

To handle the connection the server (303) has a Web Server, such as eg Apache 1.3.2. or a more recent version, and a 'servlet' interface, such as eg JSERV 0.9.10 or a more recent version.

To handle the contact with the database (305) the server (303) can use Java JDBC driver or other suitable SQL interface.

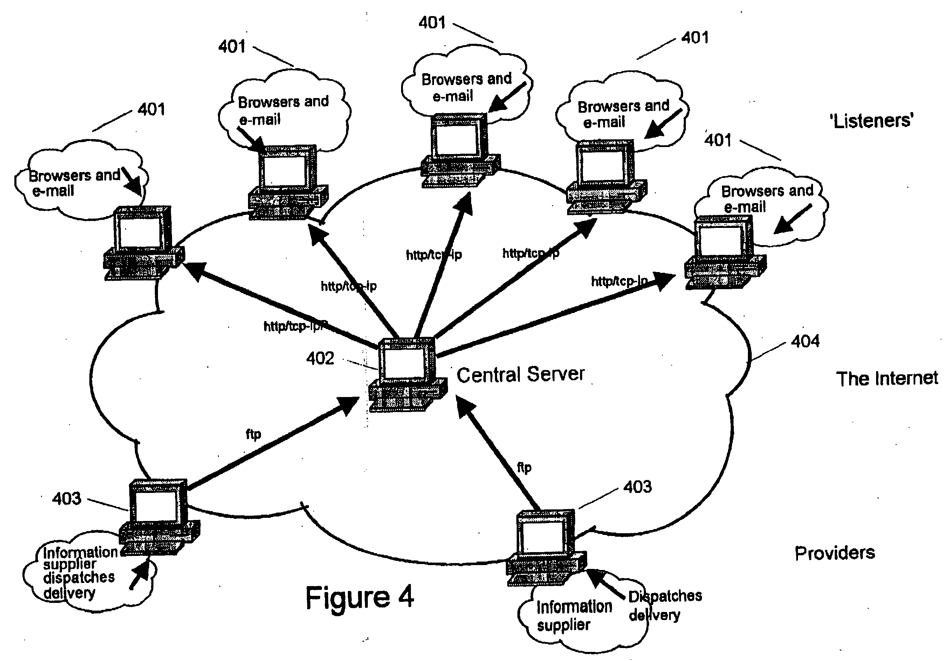

Typically the server/system (303) can be connected to several clients (301) at a time and keep connections open to them all as will be described in connection with Figure 4.

Alternatively the system can consist of several servers in order to hereby enable scaling of the solution in a convenient manner depending on the number of users/clients.

Figure 4 illustrates one embodiment of the system according to the invention in another manner.

Herein a system is shown that consists of a number of 'listeners', ie clients (401) who are connected as described above via the Internet (404) to a central server (402). The central server (402) is connected to a number of suppliers (403) of the information and/or the data that the server (402) can 'push' to the clients (401). The server (402) is connected to each of the clients (401) via one single permanent data link (a first connection) for as long as they are logged onto the server (402). When the server (402) has the information to be dispatched to one or more of the clients (401) (optionally depending on the user configuration and profile) an indication is forwarded to the clients that will then each take measures to establish a further connection whereby the information is thus transmitted.

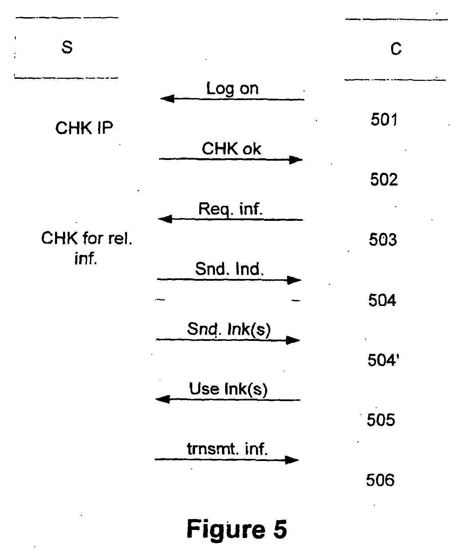

Figure 5 illustrates the course of communication between a server and a client in accordance with the invention. Shown schematically is a server (S) and a client (C). First (501) the client/a user logs onto the system/a central server, preferably via a second connection (eg via an http/https connection on port 80). Then the server checks the client's IP address in order to determine the rights of the client with regard to eg access to information. If the check turns out to be OK, eg a start html-page is transmitted (502) to the client, preferably also via the second connection. The start html-page can contain eg a news survey with the most recent data/information that is of interest to a user with the client.

Preferably a program (eg a Java applet) is transmitted to the client. Hereby the user does not have to worry about installation, updating, etc, of the programme. Alternatively the program is merely activated at the client, eg by log-on. This program preferably opens a first connection (eg via a TCP/IP) socket connection on port 8530) to the server and informs (503) the server that the client is ready to receive relevant/updated information.

The server subsequently checks whether further relevant information has arrived after the start page was dispatched. When/if this happens the server forwards (504) an indication to the client, preferably via said first connection. The programme/Java applet at the client receives this indication and subsequently calls (505) a URL (eg a static URL known to the programme/the Java applet) to a homepage with the new/updated information in a standard browser, whereby the html page is updated, preferably via the second connection, meaning that the relevant new/updated information is forwarded (506) to the client for display on eg the browser, also via the second connection.

The homepage/the html-page can either be found directly on the central server and/or on an alternative provider server. If it is found only on another provider server, the server is to be provided with relevant metadata that describe the information on the homepage on the other provider server and features a link thereto.

In this manner automated push of relevant/updated information to a client/user is obtained. The fact that an indication (and not the information as such) is forwarded ensures substantial simultaneity for access to the new information by all the clients that have desired to receive this kind of information (eg in accordance with a user profile). The actual lapse before the information is provided depends on the bandwidth between a client and the updated page.

Alternatively the information relating to the URL or a link to the updated homepage is transmitted (504') via the first connection, either along with the indication or immediately following same.

The first and the second connections can be established eg via the same physical connection on each their port (eg port 80 for the second and port 830 for the first one). Other ports can also be used. Alternatively said first and second connections are established via the same physical connection on the same port. As a further alternative, said first and second connection can be established on each their physical connection.

## Claims

1. A method of automatically transmitting information by pushing said information from a server (303; 402) to a client (201; 401) comprising
• establishment of a first data-transmission connection/channel (308) between the client (201; 401) and the central server (303; 402);
• transmission, via said first connection/channel (308) from the server (303; 402) to the client (201; 401), of at least an indication indicating that relevant and/or updated information is available at the server (303; 402);
• receipt of said indication by the client (201; 401);
• establishment or use of an already established second data-transmission connection/channel (307) between the client (201; 401) and the central server (303; 402) on the basis of said received indication; and
• transmission of said relevant information from the central server (303; 402) to the client (201; 401) via said second connection/channel (307),
and wherein said indication is of a small magnitude compared to the magnitude of said relevant information.

2. A method according to claim 1, **characterised in that** said first data transmission connection is provided/established and controlled by program information intended therefore.

3. A method according to claim 2, **characterised in that** the method further comprises
• initial transmission between the central server and the client of initial information comprising initial relevant information by the time of the establishment of the second connection/channel; and
• transmission and receipt of said program information from the central server and the client.

4. A method according to claims 2-3, characaterised in that said program information is a Java Applet.

5. A method according to claims 1-4, **characterised in that** said first and second connections are established via the same physical connection each on their own different port.

6. A method according to claims 1-4, **characterised in that** said first and second connections are established via the same physical connection on the same port.

7. A method according to claims 1 - 4, **characterised in that** said first and second connections are established via a different physical connection.

8. A method according to claims 1-7, **characterised in that** transmission of said relevant information from the central server to the client via said second connection/link comprises
• transmission of one or more links to a homepage, wherein said homepage comprises said relevant information; and
• activation at the client of said one or more links whereby said relevant information is transmitted to the client.

9. A method according to claims 1-7, **characterised in that** the central server continuously receives and stores any new relevant information from one or more information sources in a storage system.

10. A method according to claim 9, **characterised in that** the central server continuously checks the storage system for new relevant information, if any.

11. A method according to claims 1-10, **characterised in that** said indication is transmitted on the basis of an individual user profile relating to the user(s) that use(s) the client, wherein the user profile depends on one or more user-selected criterion/criteria.

12. A method according to claims 1-11, **characterised in that** said indication contains or is followed by a descriptive part, and the method further comprises display of the descriptive part to a user, wherein the user is to initiate transmission of said relevant information from the central server to the client via said second connection/channel.

13. A method according to claims 1-12, **characterised in that** said first data transmission connection/channel is provided by a TCP/IP socket connection.

14. A method according to claims 1-13, **characterised in that** said second data transmission connection/channel is provided by an http/https connection.

15. A method according to claims 1-14, **characterised in that** said information comprises metadata related to one or more of the following:
• a given text format;
• a given image format;
• a given sound format; and
• a given streaming format; or
• other suitable digital formats.

16. A method according to claims 1 - 15, **characterised in that** the method further comprises
• continuous checks on the server whether relevant information is present in a corpus of information that is of interest to one or more given clients in accordance with one or more pre-determined criterion/criteria;
• provision and/or updating of at least a part of an html page that comprises said relevant information to the given client(s), wherein the html page is located on the server and/or some other provider server;
• dispatch of said indication via said first connection (307) to be received by the given client(s), the dispatch being dependent on said continuous checks on the server; and
• automatic display of said information at the given client(s) on the basis of said indication and via said generated and/or updated html page, where said information is provided via said second connection (308).

17. A method according to claims 1 - 15, **characterised in that** the method further comprises
• continuous checks on the server whether relevant information is present in a group of information that is of interest to one or more given clients in accordance with one or more pre-determined criterion/criteria;
• provision of an e-mail that comprises said relevant information to the given client(s);
• dispatch of said indication via said first connection (307) to be received by the given client(s), the dispatch being dependent on said continuous checks on the server; and
automatic display of said information at the given client(s) on the basis of said indication and said e-mail, where said information is provided via said second connection (308).

18. A method according to claims 2 - 17, **characterised in that** the method comprises receipt of said program information from the server at the given client(s), where the program information causes the generated and/or updated html-page or e-mail to be provided on the basis of said indication.

19. A method according to claims 2 - 18, **characterised in that** said program information is transmitted to a client when the client logs onto the server, where the transmission is effected transparently to a user of the client.

20. A method according to claims 1 - 16, 18 - 19, **characterised in that** said indication comprises a link or a URL to the generated and/or updated html-page, whereby a standard browser automatically provides the html-page.

21. A method according to claims 11, 16-20, **characterised in that**, said criteria comprise a modifiable user profile.

22. A system comprising a client (201; 401) and a server for automatically transmitting information by pushing said information from the server to a client, the system (303; 402) and further comprising:
• first means for establishing a first data transmission connection/channel (308) between the client (201; 401) and a central server (303; 402);
• means for transmitting, via said first connection/channel (308) from the server (303; 402) to the client (201; 401), at least an indication to indicate that relevant and/or updated information is available at the server (303; 402);
• means for receiving said indication by the client (201; 401);
• other means for establishing or using an already established second data transmission connection/channel (307) between the client (201; 401) and the central server (303; 402) on the basis of said received indication; and
• transmission of said relevant information from the central server (303; 402) to the client (201; 401) via said second connection/channel (307),
and wherein said indication is of a small magnitude compared to the magnitude of said relevant information.

23. A system according to claim 22, **characterised in that** the system contains program information configured for providing/establishing and controlling said first data transmission connection.

24. A system according to claims 22-23, **characterised in that** said first and second connections are established via the same physical connection on their own different port.

25. A system according to claims 22-24, **characterised in that** the system further comprises
• initial transmission between the central server and the client of initial information comprising initial relevant information by the time of establishment of the second connection/channel; and
• transmission and receipt of said program information from the central server and the client.

26. A system according to claims 22-25, **characterised in that** the central server comprises a storage system configured for storing new, relevant information, if any, received continuously from one or more information sources.

27. A system according to claims 22-26, **characterised in that** said indication is transmitted on the basis of an individual user profile relating to the user(s) that use(s) the client, where the user profile depends on one or more user-selected criterion/criteria.

28. A system according to claims 22-27, **characterised in that** said indication contains or is followed by a descriptive part, and wherein the method further comprises display of the descriptive part to a user, wherein the user is to initiate transmission of said relevant information from the central server to the client via said second connection/channel.

29. A system according to claims 22-28, **characterised in that** said first data transmission connection/channel is provided by a TCP/IP socket connection, and wherein said second data transmission connection/channel is provided by an http/https connection.

30. A system according to claims 22 - 29, **characterised in that** the server further
• is configured for continuously checking whether there is information available in an information corpus that is relevant to one or more given client(s) in accordance with one or more pre-determined criteria;
• comprises means for providing and/or updating at least a part of an html-page that comprises said relevant information to the given client(s), where the html-page is located on the server and/or some other provider server;
• comprises transmission means for transmitting said indication for receipt by the given client(s), the transmission being dependent on said continuous checks on the server;
and wherein each given client
• comprises means for automatically providing said information on the basis of said indication and via said generated and/or updated html-page, where said information is provided via said second connection.

31. A system according to claims 22 - 29, **characterised in that** the server further
• is configured for continuously checking whether there is information available in an information corpus that is relevant to one or more given client(s) in accordance with one or more pre-determined criteria;
• comprises means for providing an e-mail that comprises said relevant information to the given client(s);
• comprises transmission means for transmitting said indication for receipt by the given client(s), the transmission being dependent on said continuous checks on the server;
and wherein each given client
• comprises means for automatically providing said information on the basis of said indication and said e-mail, where said information is provided via said second connection.

32. A system according to claims 23-31, **characterised in that** the given client(s) is/are configured to each receive program information, where said program information causes the generated and/or updated html-page or e-mail to be provided on the basis of said indication.

33. A system according to claims 23 - 32, **characterised in that** said program information is transmitted to a client when the client logs onto the server, wherein the transmission is accomplished transparently to a user of the client.

34. A system according to claims 22-30, 32-33, **characterised in that** said indication comprises a link or a URL to the generated and/or updated html-page, whereby a standard browser automatically provides the html-page.

35. A system according to claims 22 - 34, **characterised in that** said first connection and said second connection are established via one single physical connection on their own different port, via two different physical connections or via one single physical connection on the same port.

## Patentansprüche

1. Verfahren zur automatischen Informationsübertragung durch Schieben der Information von einem Server (303; 402) zu einem Klienten (201; 401) mit den Schritten
- einer Herstellung einer bzw. eines ersten Datenübertragungsverbindung / -kanals (308) zwischen dem Klienten (201; 401) und dem zentralen Server (303; 402);
- einer Übertragung zumindest einer Angabe, welche anzeigt, dass relevante und/oder aktualisierte Information am Server (303; 402) verfügbar ist, über die erste Verbindung / den ersten Kanal (308) von dem Server (303; 402) an den Klienten (201; 401);
- eines Empfangs der Angabe durch den Klienten (201; 401);
- einer Herstellung oder Verwendung einer bzw. eines bereits hergestellten zweiten Datenübertragungsverbindung / -kanals (307) zwischen dem Klienten (201; 401) und dem zentralen Server (303; 402) auf der Grundlage der empfangenen Angabe; und
- einer Übertragung der relevanten Information von dem zentralen Server (303; 402) an den Klienten (201; 401) über die zweite Verbindung / den zweiten Kanal (307),
und wobei die Angabe eine im Vergleich mit der Größe der relevanten Information kleine Größe aufweist.

2. Verfahren nach Anspruch 1, **dadurch gekennzeichnet, dass** die erste Datenübertragungsverbindung von dafür vorgesehener Programminformation bereitgestellt / hergestellt und gesteuert wird.

3. Verfahren nach Anspruch 2, **dadurch gekennzeichnet, dass** das Verfahren weiterhin aufweist:
- eine ursprüngliche Übertragung ursprüngliche relevante Information aufweisender ursprünglicher Information zwischen dem zentralen Server und dem Klienten bis zum Zeitpunkt der Herstellung der zweiten Verbindung / des zweiten Kanals; und
- Übertragung und Empfang der Programminformation von dem zentralen Server und dem Klienten.

4. Verfahren nach den Ansprüchen 2 - 3, **dadurch gekennzeichnet, dass** die Programminformation ein Java Applet ist.

5. Verfahren nach den Ansprüchen 1 - 4, **dadurch gekennzeichnet, dass** die erste und die zweite Verbindung über die gleiche physische Verbindung hergestellt wird, jede an ihrem eigenen unterschiedlichen Port.

6. Verfahren nach den Ansprüchen 1 - 4, **dadurch gekennzeichnet, dass** die erste und die zweite Verbindung über die gleiche physische Verbindung am gleichen Port hergestellt werden.

7. Verfahren nach den Ansprüchen 1 - 4, **dadurch gekennzeichnet, dass** die erste und die zweite Verbindung jeweils über eine unterschiedliche physische Verbindung hergestellt werden.

8. Verfahren nach den Ansprüchen 1 - 7, **dadurch gekennzeichnet, dass** die Übertragung der relevanten Information von dem zentralen Server an den Klienten über die zweite Verbindung / Verknüpfung aufweist:
- eine Übertragung einer oder mehrerer Verknüpfungen (Links) zu einer Homepage, wobei die Homepage die relevante Information aufweist; und
- eine Aktivierung beim Klienten der einen oder mehreren Verknüpfungen, wobei die relevante Information an den Klienten übertragen wird.

9. Verfahren nach den Ansprüchen 1 - 7, **dadurch gekennzeichnet, dass** der zentale Server kontinuierlich jede neue relevante Information von einer oder mehreren Informationsquelle(n) in einem Speicherungsystem empfängt und speichert.

10. Verfahren nach Anspruch 9, **dadurch gekennzeichnet, dass** der zentrale Server kontinuierlich das Speicherungssystem nach neuer relevanter Information überprüft, wenn vorhanden.

11. Verfahren nach Anspruch 1 - 10, **dadurch gekennzeichnet, dass** die Angabe auf der Grundlage eines sich auf den (die) Anwender, der (die) den Klienten benutzt (benutzen), beziehenden individuellen Anwenderprofils übertragen wird, wobei das Anwenderprofil von einem oder mehreren anwendergewählten Kriterium / Kriterien abhängt.

12. Verfahren nach den Ansprüchen 1 - 11, **dadurch gekennzeichnet, dass** die Angabe einen beschreibenden Teil enthält oder von diesem gefolgt wird und dass das Verfahren weiterhin eine Anzeige des beschreibenden Teils an einen Anwender umfasst, wobei der Anwender die Übertragung der relevanten Information von dem zentralen Server an den Klienten über die zweite Verbindung bzw. den zweiten Kanal zu initiieren hat.

13. Verfahren nach den Ansprüchen 1 - 12, **dadurch gekennzeichnet, dass** die bzw. der erste Datenübertragungsverbindung / -kanal von einer TCP / IP - Anschlussverbindung bereitgestellt wird.

14. Verfahren nach den Ansprüchen 1 - 13, **dadurch gekennzeichnet, dass** die bzw. der zweite Datenübertragungsverbindung / -kanal von einer http- / https - Verbindung bereitgestellt wird.

15. Verfahren nach den Ansprüchen 1 - 14, **dadurch gekennzeichnet, dass** die Information Metadaten aufweist, welche mit einem oder mehreren der folgenden Formate in bezug stehen
- ein gegebenes Textformat;
- ein gegebenes Bildformat;
- ein gegebenes Tonformat; und
- ein gegebenes Strömungsformat; oder
- andere geeignete digitale Formate.

16. Verfahren nach den Ansprüchen 1 - 15, **dadurch gekennzeichnet, dass** das Verfahren weiterhin aufweist:
- kontinuierliche Checks auf dem Server, ob relevante Information in einem Informationskörper vorhanden ist, welche für einen oder mehrere gegebene Klienten gemäss eines vorbestimmten Kriteriums oder mehrerer vorbestimmter Kriterien von Interesse ist;
- ein Bereitstellen und/oder Aktualisieren zumindest eines Teils einer html-Seite, welche die relevante Information für den (die) gegebenen Klienten aufweist, wobei die html-Seite auf dem Server und/oder irgendeinem anderen Provider-Server lokalisiert ist;
- ein Abschicken der Angabe über die erste Verbindung (307) zum Empfangen durch den (die) gegebenen Klienten, wobei das Abschicken von den kontinuierlichen Checks auf dem Server abhängig ist; und
- ein automatisches Anzeigen der Information an den (die) gegebenen Klienten auf der Grundlage der Angabe und über die erzeugte und/oder aktualisierte html-Seite, wobei die Information über die zweite Verbindung (308) bereitgestellt wird.

17. Verfahren nach den Ansprüchen 1 -15, **dadurch gekennzeichnet, dass** das Verfahren weiterhin aufweist:
- kontinuierliche Checks auf dem Server, ob relevante Information in einer Informationsgruppe vorhanden ist, welche für einen oder mehrere gegebene Klienten gemäss eines vorbestimmten Kriteriums oder mehrerer vorbestimmter Kriterien von Interesse ist;
- ein Vorsehen einer die relevante Information aufweisenden Email an den bzw. die gegebenen Klienten;
- ein Abschicken der von dem (den) gegebenen Klienten zu empfangenden Angabe über die erste Verbindung (307), wobei das Abschicken von den kontinuierlichen Checks auf dem Server abhängig ist; und
ein automatisches Anzeigen der Information bei dem (den) gegebenen Klienten auf der Grundlage der Angabe und der Email, wobei die Information über die zweite Verbindung (308) bereitgestellt wird.

18. Verfahren nach den Ansprüchen 2 - 17, **dadurch gekennzeichnet, dass** das Verfahren einen Empfang der Programminformation von dem Server durch den (die) gegebenen Klienten umfaßt, wobei die Programminformation bewirkt, dass die erzeugte und/oder aktualisierte html-Seite oder Email auf der Grundlage der Angabe bereitgestellt wird.

19. Verfahren nach den Ansprüchen 2 - 18, **dadurch gekennzeichnet, dass** die Programminformation an einen Klienten übertragen wird, wenn sich der Klient auf den Server einlogt, wobei die Übertragung transparent für einen Anwender des Klienten bewirkt wird.

20. Verfahren nach den Ansprüchen 1 - 16, 18 - 19, **dadurch gekennzeichnet, dass** die Angabe einen Link oder ein URL an die erzeugte und/oder aktualisierte html-Seite aufweist, wobei ein Standardbrowser automatisch die html-Seite bereitstellt.

21. Verfahren nach den Ansprüchen 11, 16 - 20, **dadurch gekennzeichnet, dass** die Kriterien ein modifizierbares Anwenderprofil aufweisen.

22. System, aufweisend einen Klienten (201; 401) und einen Server (303; 402), zur automatischen Informationsübertragung durch Schieben der Information von dem Server zu einem Klienten, wobei das System weiterhin aufweist:
- eine erste Vorrichtung zum Herstellen einer bzw. eines ersten Datenübertragungsverbindung/-kanals (308) zwischen dem Klienten (201; 401) und einem zentralen Server (303; 402);
- eine Vorrichtung zum Übertragen zumindest einer Angabe zum Anzeigen, dass relevante und/oder aktualisierte Information am Server (303; 402) verfügbar ist, über die erste Verbindung / den ersten Kanal (308) von dem Server (303; 402) an den Klienten (201; 401);
- eine Vorrichtung zum Empfangen der Angabe durch den Klienten (201; 401);
- eine weitere Vorrichtung zum Herstellen oder Verwenden einer bzw. eines bereits hergestellten zweiten Datenübertragungsverbindung/-kanals (307) zwischen dem Klienten (201; 401) und dem zentralen Server (303; 402) auf der Grundlage der empfangenen Angabe; und
- wobei eine Übertragung der relevanten Information von dem zentralen Server (303; 402) an den Klienten (201; 401) über die zweite Verbindung / den zweiten Kanal (307) stattfindet,
und wobei die Angabe eine im Vergleich zu der Größe der relevanten Information kleine Größe aufweist.

23. System nach Anspruch 22, **dadurch gekennzeichnet, dass** das System Programminformation enthält, welche zum Bereitstellen/Herstellen und Steuern der ersten Datenübertragungsverbindung konfiguriert ist.

24. System nach den Ansprüchen 22 - 23, **dadurch gekennzeichnet, dass** die erste und die zweite Verbindung über die gleiche physische Verbindung hergestellt wird, jede an ihrem eigenen unterschiedlichen Port.

25. System nach den Ansprüchen 22 - 24, **dadurch gekennzeichnet, dass** bei dem System weiterhin
- eine ursprüngliche Übertragung von ursprüngliche relevante Information aufweisender ursprünglicher Information zwischen dem zentralen Server und dem Klienten bis zum Zeitpunkt der Herstellung der zweiten Verbindung / des zweiten Kanals; und
- eine Übertragung und ein Empfang der Programminformation von dem zentralen Server und dem Klienten stattfindet.

26. System nach den Ansprüchen 22 - 25, **dadurch gekennzeichnet, dass** der zentrale Server ein Speicherungssystem aufweist, welches zum Speichern neuer relevanter, von einer oder mehreren Informationsquelle(n) kontinuierlich empfangener Information, wenn vorhanden, konfiguriert ist.

27. System nach den Ansprüchen 22 - 26, **dadurch gekennzeichnet, dass** die Angabe auf der Grundlage eines sich auf den (die) Anwender, welcher (welche) den Klienten benutzt (benutzen), beziehenden individuellen Anwenderprofils übertragen wird, wobei das Anwenderprofil von einem anwenderausgewählten Kriterium oder mehreren anwenderausgewählten Kriterien abhängt.

28. System nach den Ansprüchen 22 - 27, **dadurch gekennzeichnet, dass** die Angabe einen beschreibenden Teil enthält oder von diesem gefolgt wird, und wobei das Verfahren weiterhin eine Anzeige des beschreibenden Teils an den Anwender aufweist, wobei der Anwender die Übertragung der relevanten Information von dem zentralen Server an den Klienten über die zweite Verbindung/den zweiten Kanal zu initiieren hat.

29. System nach den Ansprüchen 23 - 28, **dadurch gekennzeichnet, dass** die bzw. der erste Datenübertragungsverbindung/-kanal von einer TCP/IP-Anschlussverbindung bereitgestellt wird, und bei dem die bzw. der zweite Datenübertragungsverbindung/-kanal von einer http/https-Verbindung bereitgestellt wird.

30. System nach den Ansprüchen 22 - 29, **dadurch gekennzeichnet, dass** der Server weiterhin
- zum kontinuierlichen Überprüfen, ob in einem Informationskörper Information verfügbar ist, welche für einen oder mehrere gegebene(n) Klienten gemäss einem vorbestimmten Kriterium oder mehreren vorbestimmten Kriterien relevant ist, konfiguriert ist;
- eine Vorrichtung zum Bereitstellen und/oder Aktualisieren von zumindest einem Teil einer html-Seite, welche die relevante Information aufweist, für den (die) gegebenen Klienten aufweist, wobei die html-Seite auf dem Server und/oder irgendeinem anderen Provider-Server lokalisiert ist;
- eine Übertragungsvorrichtung zum Übertragen der Angabe zum Empfang durch den (die) gegebenen Klienten aufweist, wobei die Übertragung von den kontinuierlichen Checks (Prüfvorgängen) auf dem Server abhängig ist;
und wobei jeder gegebene Klient
- eine Vorrichtung zum automatischen Bereitstellen der Information auf der Grundlage der Angabe und über die erzeugte und/oder aktualisierte html-Seite aufweist, wobei die Information über die zweite Verbindung bereitgestellt wird.

31. System nach den Ansprüchen 22 - 29, **dadurch gekennzeichnet, dass** der Server weiterhin
- zum kontinuierlichen Überprüfen, ob Information in einem Informationskörper verfügbar ist, welche für einen oder mehrere gegebene(n) Klienten gemäss einem vorbestimmten Kriterium oder mehreren vorbestimmten Kriterien konfiguriert ist;
- eine Vorrichtung zum Bereitstellen einer Email, welche die relevante Information an den (die) gegebenen Klienten aufweist, aufweist;
- eine Übertragungsvorrichtung zum Übertragen der Angabe zum Empfang durch den (die) gegebenen Klienten aufweist, wobei die Übertragung von den kontinuierlichen Checks (Prüfvorgängen) auf dem Server abhängig ist;
und wobei jeder gegebene Klient
- eine Vorrichtung zum automatischen Bereitstellen der Information auf der Grundlage der Angabe und der Email aufweist, wobei die Information über die zweite Verbindung bereitgestellt wird.

32. System nach den Ansprüchen 23 - 31, **dadurch gekennzeichnet, dass** der (die) gegebene(n) Klient(en) so konfiguriert ist (sind), dass jeder Programminformation empfängt, wobei die Programminformation bewirkt, dass die erzeugte und/oder aktualisierte html-Seite oder Email auf der Grundlage der Angabe bereitgestellt wird.

33. System nach den Ansprüchen 23 - 32, **dadurch gekennzeichnet, dass** die Programminformation an einen Klienten übertragen wird, wenn der Klient sich auf dem Server einlogt, wobei die Übertragung für einen Anwender des Klienten transparent ausgeführt wird.

34. System nach den Ansprüchen 22 - 30, 32 - 33, **dadurch gekennzeichnet, dass** die Angabe eine Verknüpfung oder ein URL an die erzeugte und/oder aktualisierte html-Seite aufweist, wobei ein Standardbrowser die html-Seite automatisch bereitstellt.

35. System nach den Ansprüchen 22 - 34, **dadurch gekennzeichnet, dass** die erste Verbindung und die zweite Verbindung über eine einzige physische Verbindung auf ihren eigenen unterschiedlichen Ports über zwei unterschiedliche physische Verbindungen oder über eine einzige physische Verbindung auf dem gleichen Port hergestellt werden.

## Revendications

1. Procédé permettant de transmettre automatiquement des informations, en poussant lesdites informations, depuis un serveur (303 ; 402) vers un client (201 ; 401) comprenant les étapes consistant à :
. établir une première connexion/voie de transmission de données (308) entre le client (201 ; 401) et le serveur central (303 ; 402) ;
. transmettre, via ladite première connexion/voie (308) depuis le serveur (303 ; 402) vers le client (201 ; 401), au moins une indication selon laquelle des informations appropriées et/ou mises à jour sont disponibles sur le serveur (303 ; 402) ;
. attendre la réception de ladite indication par le client (201 ; 401) ;
. établir ou utiliser une deuxième connexion/vole de transmission de données (307) déjà établie entre le client (201 ; 401) et le serveur central (303 ; 402) sur la base de ladite indication reçue ; et
. transmettre lesdites informations appropriées depuis le serveur central (303 ; 402) vers le client (201 ; 401) via ladite deuxième connexion/voie (307),
et dans lequel ladite indication est de petite taille par rapport à la taille desdites informations appropriées.

2. Procédé selon la revendication 1, **caractérisé en ce que** ladite première connexion de transmission de données est fournie/établie et contrôlée par des informations de programme destinées à cet effet.

3. Procédé selon la revendication 2, **caractérisé en ce que** le procédé comprend en outre les étapes consistant à :
. transmettre initialement entre le serveur central et le client des informations initiales comprenant les informations initiales appropriées au moment de l'établissement de la deuxième connexion/voie ; et
. transmettre et recevoir lesdites informations de programme depuis le serveur central et le client.

4. Procédé selon les revendications 2 et 3, **caractérisé en ce que** lesdites informations de programmes sont une aplette Java.

5. Procédé selon les revendications 1 à 4, **caractérisé en ce que** lesdites première et deuxième connexions sont établies via la même connexion physique, chacune sur son propre port différent.

6. Procédé selon les revendications 1 à 4, **caractérisé en ce que** lesdites première et deuxième connexions sont établies via la même connexion physique sur le même port.

7. Procédé selon les revendications 1 à 4, **caractérisé en ce que** lesdites première et deuxième connexions sont établies via une connexion physique différente.

8. Procédé selon les revendications 1 à 7, **caractérisé en ce que** la transmission desdites informations appropriées depuis le serveur central vers le client via ladite deuxième connexion/liaison comprend les étapes consistant à :
. transmettre un ou plusieurs liens vers une page d'accueil, dans lequel ladite page d'accueil comprend lesdites informations appropriées ; et
. activer au niveau du client lesdits un ou plusieurs liens de telle manière que lesdites informations appropriées soient transmises au client.

9. Procédé selon les revendications 1 à 7, **caractérisé en ce que** le serveur central reçoit et stocke continuellement toutes nouvelles informations appropriées depuis une ou plusieurs sources d'informations dans un système de stockage.

10. Procédé selon la revendication 9, **caractérisé en ce que** le serveur central recherche continuellement dans le système de stockage s'il existe de nouvelles informations appropriées.

11. Procédé selon les revendications 1 à 10, **caractérisé en ce que** ladite indication est transmise sur la base d'un profil utilisateur individuel relatif à l'utilisateur (aux utilisateurs) qui utilise(nt) le client, dans lequel le profil utilisateur dépend d'un ou plusieurs critères sélectionnés par l'utilisateur.

12. Procédé selon les revendications 1 à 11, **caractérisé en ce que** ladite indication contient ou est suivie par une partie descriptive, et **en ce que** le procédé comprend en outre l'affichage de la partie descriptive pour un utilisateur, dans lequel l'utilisateur doit lancer la transmission desdites informations appropriées depuis le serveur central vers le client via ladite deuxième connexion/voie.

13. Procédé selon les revendications 1 à 12, **caractérisé en ce que** ladite première connexion/voie de transmission de données est fournie par une connexion réseau TCP/IP.

14. Procédé selon les revendications 1 à 13, **caractérisé en ce que** ladite deuxième connexion/voie de transmission de données est fournie par une connexion http/https.

15. Procédé selon les revendications 1 à 14, **caractérisé en ce que** lesdites informations comprennent des métadonnées relatives à un ou plusieurs des formats suivants :
. un format texte donné ;
. un format image donné ;
. un format son donné ; et
. un format de transmission en continu donné ; ou
. d'autres formats numériques appropriés.

16. Procédé selon les revendications 1 à 15, **caractérisé en ce que** le procédé comprend en outre les étapes consistant à :
. vérifier continuellement sur le serveur si des informations appropriées sont présentes dans un groupe d'informations qui présentent un intérêt pour un ou plusieurs clients donnés selon un ou plusieurs critères prédéterminés ;
. fournir et/ou mettre à jour au moins une partie d'une page html qui comprend lesdites informations appropriées au(x) client(s) donné(s),
dans lequel la page html est placée sur le serveur et/ou sur le serveur d'un autre fournisseur ;
. envoyer via ladite première connexion (307) ladite indication qui doit être reçue par le(s) client(s) donné(s), l'envoi étant dépendant desdits contrôles continus sur le serveur ; et
. afficher automatiquement lesdites informations sur le(s) client(s) donné(s) sur la base de ladite indication et via ladite page html générée et/ou mise à jour, où lesdites informations sont fournies via ladite deuxième connexion (308).

17. Procédé selon les revendications 1 à 15, **caractérisé en ce que** le procédé comprend en outre les étapes consistant à :
. vérifier continuellement sur le serveur si des informations appropriées sont présentes dans un groupe d'informations qui présentent un intérêt pour un ou plusieurs clients donnés selon un ou plusieurs critères prédéterminés ;
. fournir un courrier électronique qui comprend lesdites informations appropriées au(x) client(s) donné(s) ;
. envoyer via ladite première connexion (307) ladite indication qui doit être reçue par le(s) client(s) donné(s), l'envoi étant dépendant desdits contrôles continus sur le serveur ; et
. afficher automatiquement lesdites informations sur le(s) client(s) donné(s) sur la base de ladite indication et dudit courrier électronique, où lesdites informations sont fournies via ladite deuxième connexion (308).

18. Procédé selon les revendications 2 à 17, **caractérisé en ce que** le procédé comprend la réception par le(s) client(s) donné(s) desdites informations de programme envoyées par le serveur, dans lequel les informations de programme entraînent la fourniture de la page html générée et/ou mise à jour ou du courrier électronique sur la base de ladite indication.

19. Procédé selon les revendications 2 à 18, **caractérisé en ce que** lesdites informations de programme sont transmises à un client lorsque le client se connecte au serveur, dans lequel la transmission est effectuée de manière transparente pour un utilisateur du client.

20. Procédé selon les revendications 1 à 16, 18 et 19, **caractérisé en ce que** ladite indication comprend un lien ou une URL de la page html générée et/ou mise à jour, de telle manière qu'un navigateur standard fournisse automatiquement la page html.

21. Procédé selon les revendications 11, 16 à 20, **caractérisé en ce que** lesdits critères comprennent un profil utilisateur modifiable.

22. Système comprenant un client (201 ; 401) et un serveur (303 ; 402) permettant de transmettre automatiquement des informations en poussant lesdites informations depuis le serveur vers un client et comprenant en outre :
. des premiers moyens pour établir une première connexion/voie de transmission de données (308) entre le client (201 ; 401) et un serveur central (303 ; 402) ;
. des moyens pour transmettre, via ladite première connexion/voie (308) depuis le serveur (303 ; 402) vers le client (201 ; 401), au moins une indication selon laquelle des informations appropriées et/ou mises à jour sont disponibles sur le serveur (303 ; 402) ;
. des moyens pour recevoir ladite indication par le client (201 ; 401) ;
. d'autres moyens pour établir ou utiliser une deuxième connexion/voie de transmission de données (307) déjà établie entre le client (201 ; 401) et le serveur central (303 ; 402) sur la base de ladite indication reçue ; et
. la transmission desdites informations appropriées depuis le serveur central (303 ; 402) vers le client (201 ; 401) via ladite deuxième connexion/voie (307),
et dans lequel ladite indication est de petite taille par rapport à la taille desdites informations appropriées.

23. Système selon la revendication 22, **caractérisé en ce que** le système contient des informations de programme configurées pour fournir/établir et contrôler ladite première connexion de transmission de données.

24. Système selon les revendications 22 et 23, **caractérisé en ce que** lesdites première et deuxième connexions sont établies via la même connexion physique sur leur propre port différent.

25. Système selon les revendications 22 à 24, **caractérisé en ce que** le système comprend en outre les étapes consistant à :
. transmettre initialement entre le serveur central et le client des informations initiales comprenant les informations initiales appropriées au moment de l'établissement de la deuxième connexion/voie ; et
. transmettre et recevoir lesdites informations de programme depuis le serveur central et le client.

26. Système selon les revendications 22 à 25, **caractérisé en ce que** le serveur central comprend un système de stockage configuré pour stocker de nouvelles informations appropriées, s'il en existe, reçues continuellement depuis une ou plusieurs sources d'informations.

27. Système selon les revendications 22 à 26, **caractérisé en ce que** ladite indication est transmise sur la base d'un profil utilisateur individuel relatif à l'utilisateur (aux utilisateurs) qui utilise(nt) le client, dans lequel le profil utilisateur dépend d'un ou plusieurs critères sélectionnés par l'utilisateur.

28. Système selon les revendications 22 à 27, **caractérisé en ce que** ladite indication contient ou est suivie par une partie descriptive, et dans lequel le procédé comprend en outre l'affichage de la partie descriptive pour un utilisateur, dans lequel l'utilisateur doit lancer la transmission desdites informations appropriées depuis le serveur central vers le client via ladite deuxième connexion/voie.

29. Système selon les revendications 22 à 28, **caractérisé en ce que** ladite première connexion/voie de transmission de données est fournie par une connexion réseau TCP/IP, et dans lequel ladite deuxième connexion/voie de transmission de données est fournie par une connexion http/https.

30. Système selon les revendications 22 à 29, **caractérisé en outre par le fait que** le serveur :
. est configuré pour vérifier continuellement s'il existe des informations disponibles dans un groupe d'informations qui sont appropriées à un ou plusieurs clients donnés selon un ou plusieurs critères prédéterminés ;
. comprend des moyens pour fournir et/ou mettre à jour au moins une partie d'une page html qui comprend lesdites informations appropriées au(x) client(s) donné(s), où la page html est placée sur le serveur et/ou sur le serveur d'un autre fournisseur ;
. comprend des moyens de transmission pour transmettre ladite indication pour réception par le(s) client(s) donné(s), la transmission étant dépendante desdits contrôles continus sur le serveur ;
et dans lequel chaque client donné
. comprend des moyens pour fournir automatiquement lesdites informations sur la base de ladite indication et via ladite page html générée et/ou mise à jour, dans lequel lesdites informations sont fournies via ladite deuxième connexion.

31. Système selon les revendications 22 à 29, **caractérisé en outre par le fait que** le serveur :
. est configuré pour vérifier continuellement s'il existe des informations disponibles dans un groupe d'informations qui sont appropriées pour un ou plusieurs clients donnés selon un ou plusieurs critères prédéterminés ;
. comprend des moyens pour fournir un courrier électronique qui comprend lesdites informations appropriées au(x) client(s) donné(s) ;
. comprend des moyens de transmission pour transmettre ladite indication pour réception par le(s) client(s) donné(s), la transmission étant dépendante desdits contrôles continus sur le serveur ;
et dans lequel chaque client donné
. comprend des moyens pour fournir automatiquement lesdites informations sur la base de ladite indication et dudit courrier électronique, où lesdites informations sont fournies via ladite deuxième connexion.

32. Système selon les revendications 23 à 31, **caractérisé en ce que** le(s) client(s) donné(s) est/sont configuré(s) pour recevoir chacun des informations de programme, dans lequel lesdites informations de programme entraînent la fourniture de la page html générée et/ou mise à jour ou du courrier électronique sur la base de ladite indication.

33. Système selon les revendications 23 à 32, **caractérisé en ce que** lesdites informations de programme sont transmises à un client lorsque le client se connecte au serveur, dans lequel la transmission est effectuée de manière transparente pour un utilisateur du client.

34. Système selon les revendications 22 à 30, 32 et 33, **caractérisé en ce que** ladite indication comprend un lien ou une URL de la page html générée et/ou mise à jour, de telle manière qu'un navigateur standard fournisse automatiquement la page html.

35. Système selon les revendications 22 à 34, **caractérisé en ce que** ladite première connexion et ladite deuxième connexion sont établies via une connexion physique unique sur leur propre port différent, via deux connexions physiques différentes ou via une connexion physique unique sur le même port.
